Europäisches Patentamt

European Patent Office

Office européen des brevets

(11) Publication number: **0 183 343**
**B1**

# EUROPEAN PATENT SPECIFICATION

(45) Date of publication of patent specification: **28.06.89**

(51) Int. Cl.⁴: **F 02 M 31/16, F 23 K 5/00**

(21) Application number: **85306067.1**

(22) Date of filing: **27.08.85**

(54) **Fuel tank heating system.**

(30) Priority: **30.11.84 US 676869**

(43) Date of publication of application:
**04.06.86 Bulletin 86/23**

(45) Publication of the grant of the patent:
**28.06.89 Bulletin 89/26**

(84) Designated Contracting States:
**AT CH DE FR GB IT LI SE**

(56) References cited:
**EP-A-0 055 461**
**DE-A-3 241 065**
**DE-C- 381 069**
**FR-A- 548 661**
**GB-A-2 107 782**
**US-A-1 892 197**
**US-A-2 608 246**
**US-A-3 699 938**

**PATENTS ABSTRACTS OF JAPAN, vol. 8, no.
20 (M-271)1457r, 27th January 1984; & JP - A -
58 178 859 (KIYOUDOU KISEN K.K.) 19-10-1983**

(73) Proprietor: **DAVCO MANUFACTURING
CORPORATION
4601 Platt Road
Ann Arbor Michigan 48014 (US)**

(72) Inventor: **Davis, Leland Lowell
5385 Saline Ann Arbor Road
Saline Michigan 487176 (US)**

(74) Representative: **Williams, Trevor John et al
J.A. KEMP & CO. 14 South Square Gray's Inn
London WC1R 5EU (GB)**

Courier Press, Leamington Spa, England.

EP 0 183 343 B1

# Description

This invention relates to a fuel heating system and particularly, to a system for heating fuel oil within a fuel tank before it is conducted into a fuel delivery circuit.

Diesel engine powered machines such as motor vehicles, stationary generating plants, and other fuel oil combustion devices are often operated in environmental conditions wherein the fuel oil and fuel delivery circuit are subjected to cold ambient temperatures. At sufficiently low temperatures, fuel oils become viscous, and develop paraffin or wax particles. These fuels have characteristic temperatures at which they become "cloudy" due to the pressure of dispensed wax crystals and at which they "freeze" or become a semi-solid mass, referred to as their cloud and pour points, respectively. Often fuel oil in use is exposed to these critical temperatures. Some diesel engine fuels have a cloud point of −7°C (20°F) and a pour point of −18°C (0°F). Additionally, water which invariably is mixed with the fuel oil can freeze, forming ice particles. Such conditions may severely restrict fuel flow within the fuel delivery circuit, leading to reduced power output or complete inoperability of the associated fuel consuming device. Such problems obviously occur when the fuel reduces the point of solidification. Cloudy fuel may also lead to fuel flow restrictions when the suspended wax particles accumulate in filter elements and at other points in the fuel system. One method of preventing this condition is to maintain the fuel temperature above its cloud and pour points. This approach, however, is not always possible since adequate heat or power may not be available during storage periods, or while the associated fuel oil fired device is not operating.

In order to address such problems, many users of fuel oil combustion devices such as diesel engines provide fuel processing devices within the fuel delivery circuit. A number of such devices are described by my previously issued U.S. Patents Nos. 4 368 716, 4 428 351, 4 395 996, 4 421 090 and my currently pending Patent Applications, Serial Nos. 463 041, filed 1 February 1983, 573 292, filed 23 January 1984, and 653 854 filed 24 September 1984. Many of the fuel processors and fuel heating apparatuses described by the preceding patents and patent applications further provide water separation and particulate filtration functions. Although these devices are entirely satisfactory in heating fuel drawn from a fuel reservoir in sufficiently cold ambient temperatures or when prolonged cold soaking occurs, it may be difficult or impossible to draw fuel from the fuel tank. In such conditions, the fuel oil within the fuel tank can become an essentially immovable mass of completely waxed fuel. In addressing such problems, designers of fuel heating systems in the past have attempted to overcome such difficulties by supplying a sufficient level of heat energy to the fuel tank to melt the entire contents. However, such approaches require such extremely high power requirements as to be inefficient or prohibitive.

In view of the above, it is an object of this invention to provide an apparatus which acts to warm fuel within a fuel tank prior to its introduction into the remainder of the fuel delivery circuit. It is a further object of this invention to accomplish such fuel heating using a minimal power input requirement. Additional objects of the invention are to provide such fuel heating employing a minimum of components and providing a system simple in configuration and operation.

DE—A—3 241 065 discloses a fuel supply system in accordance with the prior art portion of claim 1 in that a single heating means is provided using engine coolant to supply heat back to the main fuel tank and to a smaller quantity of fuel during passage from the fuel tank to the engine. As compared therewith the present invention, as characterised in claim 1, provides an additional local electrical heater for the relatively small quantity of fuel waiting in the small fuel processor prior to being supplied to the engine. This assists in rapidly raising the fuel to a temperature at which it is usable and is not dependent upon the engine being operative as the source of heat.

The above objects of this invention are achieved by employing a fuel processor device which acts as a small-capacity fuel reservoir which provides warmed fuel for initial operation, and a larger capacity main fuel reservoir which holds the bulk of the stored fuel. The larger capacity main fuel reservoir includes heating means associated with the fuel processor to provide a sufficient flow rate of warmed fuel to sustain continued operation of the associated fuel oil fired device. High overall thermal efficiency is provided by heating a very small quantity of fuel oil for initial start-up and by providing a steady state energy input level into the main fuel reservoir which warms fuel to provide a flow rate of warmed fuel related to the fuel consumption rate of the fuel consuming device. No attempt need be made in accordance with this invention to maintain the entire contents of the main fuel reservoir in a wax-free state, even while the fuel consuming device is operating.

Additional benefits and advantages of the present invention will become apparent to those skilled in the art to which this invention relates from the subsequent description of the preferred embodiments and the appended claims, taken in conjunction with the accompanying drawings.

Brief description of the drawings

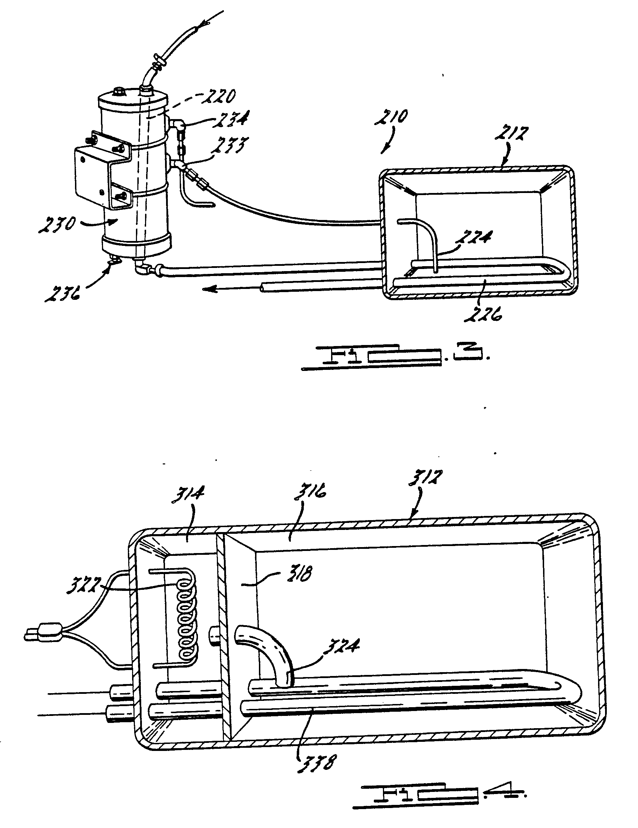

Figure 1 is a cross-sectional view of a fuel heating system according to a first embodiment of this invention which employs a separated fuel tank having a fuel processing section and a main fuel reservoir section, and having a heated fluid conducting conduit disposed in both fuel tank sections;

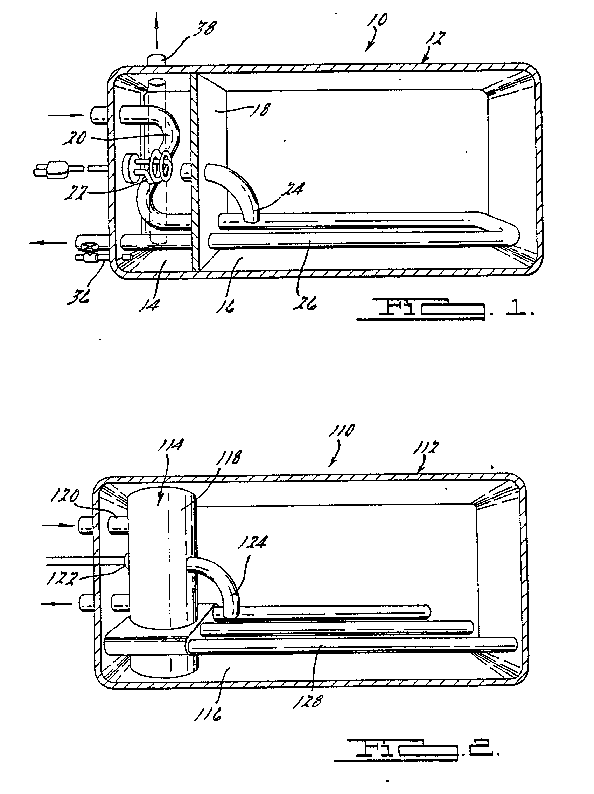

Figure 2 is a cross-sectional view of a fuel heating system according to a second embodiment of this invention wherein heat conducting members are placed in thermal communication with the fuel processing section of a separated fuel tank which conducts heat into the main fuel reservoir section of the tank;

Figure 3 is a pictorial view of a fuel processor and a cross-sectional view of a fuel tank of a third embodiment of this invention wherein the fuel processor and fuel tank components are physically separated and include means for conducting a heated fluid into a conduit within the fuel tank for heating fuel therein; and

Figure 4 is a cross-sectional view of a fuel heating system according to a fourth embodiment of this invention wherein a pair of electrically energized heating devices are employed.

Detailed description of the invention

A fuel heating system according to a first embodiment of this invention is shown in Figure 1 and is generally designated there by reference character 10. System 10 is particularly adapted for use in a fuel supply system for a diesel engine powered device such as a motor vehicle or a power generating plant. System 10, and those described hereinafter, however, may be used in conjunction with any type of fuel combustion operated device, including turbine engines, furnaces, etc. Fuel heating system 10 includes fuel tank 12 which is divided into two sections, fuel processing section 14 and main fuel reservoir section 16, which are physically separated by wall 18. Fuel processing section 14 includes internally disposed conduit 20 which conducts a heated fluid such as engine coolant within fuel processing section 14 and is in heat exchange relationship with the fuel therein, thereby warming the fuel. Additionally, fuel processing section 14 includes electric immersion heater 22 which may be employed to maintain the temperature of the fuel within the fuel processor section 14 at a level above its cloud point, thereby maintaining the associated device in a state of constant readiness. Electric immersion heater 22 may also be energized a short time period before attempted start-up of the associated fuel oil fired apparatus, thereby warming a small quantity of fuel for initial operation. Wall 18 may be formed from any suitable material, for example, sheet metal, and acts to separate the fluids within fuel tank 12 into two sections. Fuel outlet conduit 38, disposed in fuel processing section 14, serves to conduct fuel to the remaining branches of the fuel delivery circuit or to a particulate filter mounted within or to fuel tank 10. The use of such particulate filters mounted directly to a fuel tank having a fuel heating section is disclosed in my issued U.S. Patent No. 4,395,996 which is hereby incorporated by reference. Drain valve 36 is optionally provided to permit the periodic removal of water or other impurities which collect in the lower portion of section 14.

In accordance with this embodiment, conduit 20 is elongated to have a portion thereof, identified by reference number 26, which extends into a lower portion of main fuel reservoir section 16. Conduit portion 26 preferably is shaped to provide an optimum or adequate heat transfer surface and is positioned immediately above a portion of the floor of tank 12. Engine coolant or another heated fluid such as oil, exhaust gases, etc. is preferably conducted within conduit 20 such that it is first conducted into section 14 and thereafter into section 16. This direction of flow insures that the greatest amount of heat available for fuel warming is provided in fuel processor section 14. Fuel pickup tube 24 forms a fuel communication path between sections 14 and 16. Fuel pickup tube 24 has an inlet which is located in close proximity with conduit 26 within fuel storage section 16 and is preferably positioned between the legs of conduit 26. Further, fuel pickup tube 24 is preferably located slightly above conduit 26. This relationship of fuel pickup tube 24 with respect to conduit 26 provides a location desirable from a heat trasnfer view point to provide warmed fuel to fuel processing section 14.

In order to maximize the useful fuel capacity of fuel tank 12, it may be desirable to locate conduit 26 and fuel pickup tube 28 in a locally depressed sump section of the tank. The tank shapes shown herein are provided for illustrative purposes only.

In operation, when used in a diesel engine fuel delivery system, energy is applied to electric heater 22 constantly or during a predetermined period of time prior to engine start-up. This energy input warms a small volume of fuel within fuel processing section 14. When liquified fuel is available, it is transmitted from section 14 to the associated diesel engine or other fuel consuming device. Upon engine warmup, heated engine coolant, lubricating oil, exhaust gases or an intermediate heat exchange fluid become available for transmission into conduits 20 and 26. When the circulated fluid reaches a suitable temperature, the entire volume of fuel processing section 14 becomes warmed. Heated fluid flow within conduit 26 causes localized warming of the fuel within main fuel reservoir section 16. This localized warming provides fuel in a flowable state adjacent the inlet of fuel pickup tube 24. As previously stated, it is not necessary to completely warm the entire contents of fuel storage section 16. In fact, it has been found that the formation of a continuous surface of paraffin on the interior surfaces of fuel storage section 16 actually enhances the efficiency of the fuel warming effect provided by conduit section 26, since it acts as an efficient insulating layer. Further, this insulating layer prevents excessive heat loss from fuel processing section 14 when electric heater 22 is energized. Efficiency of the system is provided since the amount of fuel initially heated within fuel processing section 14 is only that quantity necessary to sufficiently warm the engine until a hot fluid for fuel warming becomes available. Fuel within main fuel reservoir section 16 is heated at the rate at which it is being consumed by the associated engine. Control over the system may be provided by employing a temperature sensitive element which modulates energy supplied to electric heater 22. Similarly, the flow of fluid within conduits 20 and 26 may be controlled to prevent fuel overheating.

The electric heater 22 is employed, to provide a quantity of warmed fuel required to support internal combustion. Thereafter, when a warmed fluid becomes available for transmission within conduits 20 and 26, the fuel becomes warmed in a progressive manner, to above its pour point in main fuel reservoir section 16 to a more elevated temperature (preferably above the fuel's cloud point) in fuel processing section 14.

A second embodiment according to this invention is shown in Figure 2. Fuel heating system 110, like the first embodiment, includes fuel tank 112, divided into two sections; fuel processing section 114 and main fuel reservoir section 116. This embodiment varies from the first, however, in that wall 118 forms a fully enclosed vessel which is surrounded by fuel within section 116. Disposed within processing section 114 is a heat source comprising, for example, conduit 120 which conducts a heated fluid such as engine coolant within that section. Electrical immersion heater 122 is installed within fuel processing section 116 as an additional or exclusive heat source and may be continuously energized or energized a short period of time prior to engine start-up. This embodiment varies principally from the first in that conduit 120 is not extended to form a section 26 within main fuel reservoir section 116. Instead, other means are employed to conduct heat into section 116 to provide initial warming of fuel within that section. For this embodiment, heat from section 114 is conducted into main fuel reservoir section 116 using heat radiating rods or tubes 128 which are attached to wall 118 in a manner permitting conductive heat transfer between these components. Rods 128 are preferably made from a metal exhibiting high heat conduction properties such as copper or aluminum. Heat is transferred through conduction to rods 128 and is thereafter dissipated to fuel surrounding the rods. Like the first embodiment, fuel pickup tube 124 is employed which communicates fuel processing section 114 with fuel storage section 116. The orientation of pickup tube 124 is also like that previously described, i.e. it is placed in close proximity with the heat source and preferably vertically above it, thereby taking advantage of heat transfer principles to provide efficient preheating of fuel.

A number of variations of the second embodiment of fuel heating system 110 are also well within the scope of this invention. For example, a solid plate could be used in place of rods or tubes 128. Additionally, so-called "heat pipes" could be used which are tubular members filled with a two-phase heat transport media. These devices exhibit exceptional heat transfer capabilities since they approach maintaining their entire surface at a uniform temperature despite localized thermal loadings. The use of heat radiating rods or pipes or other heat conduction means described in conjunction with this embodiment could also be employed with the planar shaped wall 18 of the first embodiment.

A third embodiment of a fuel heating system according to this invention is shown with reference to Figure 3 and is designated there by reference character 210. This embodiment differs from the two previously described in that the fuel processing apparatus is physically separated from fuel tank 212. As shown in Figure 3, a separate fuel processor 230 is employed. This device may be any high-performance fuel processor which provides fuel heating such as that described by my issued U.S. Patent No. 4,368,716. Fuel processor 230 includes an internally disposed heated fluid conducting conduit 220, and fuel inlet and outlet 233 and 234, respectively. Fuel processor 230 also includes an auxiliary electric heater (not shown) and may further include a manually or automatically actuated drain valve 236. Another conduit 226 is disposed within fuel tank 212 in a fashion similar to that of the first embodiment. Similarly, fuel pickup tube 224 is provided and oriented as previously described. Conduits are provided which communicate fuel pickup tube 224 with fuel processor 230 and conduit 220 with conduit 226. Otherwise, this device performs precisely like the first embodiment, in that a heated fluid, such as engine coolant, is conducted into the fuel processor 230 and thereafter into conduit 226 to provide localized warming of fuel in main fuel reservoir section 216.

A fourth embodiment of a fuel heating system according to this invention is illustrated in Figure 4. This embodiment is similar to the first two in that fuel tank 212 is divided into two sections, fuel processing section 314 and main fuel reservoir section 316 by wall 318. For this embodiment, conduit 20 is eliminated and section 314 is heated by electrical immersion heater 322. This heater may be constantly energized or energized a predetermined period of time before engine start-up. Once an engine is started, and particularly when it is used to power an electric generator, high levels of electrical power become available. In accordance with this embodiment of the invention, a second immersion heater 338 is provided which extends into main fuel reservoir section 316. Therefore, after engine start-up, electrical power is provided to heater 338 to warm fuel in the vicinity of fuel pickup tube 324. In accordance with this embodiment, heater 338 also acts to conduct heat within fuel processing section 314 provided by heater 322, even while the second heater 338 is not energized. This is accomplished by mounting a portion of heater 338 within section 314 and making the heater from a heat conducting material. Therefore, prior to energization of heater 338, fuel in the vicinity of fuel pickup tube 324 is heated to a point where it can be drawn into section 114 in a manner like that according to the second embodiment shown in Figure 2. The proximity of fuel pickup tube with heater 338 is substantially like that previously described for the previous embodiments. An automatic control system like that described previously is needed for the apparatus shown in Figure 4. Such control could be achieved by employing a separate temperature sensor or by employing a self limiting device for heaters 322 and 338 such as those made from positive temperature coefficient (PTC) materials.

## Claims

1. A fuel supply system for heating fuel, comprising: a fuel tank (12), a fuel processing unit (14) adapted to contain a volume of fuel which is substantially less than the fuel volume capacity of said fuel tank, fuel heating means (20, 26) for heating fuel both within said fuel processing unit and within a localised area of said fuel tank, and conduit means (24, 38) for transferring fuel from said fuel tank to said fuel processing unit and for transferring fuel out of said fuel processing unit, said conduit means including a fuel pickup tube (24) disposed in said fuel tank for conducting fuel within said fuel tank from a location in close proximity with said fuel heating means (26) characterised by second fuel heating means (22) for heating fuel within said fuel processing unit (14), said second fuel heating means comprising an electrical heater (22) disposed in said fuel processor (14).

2. A fuel supply system according to claim 1, characterised in that the first fuel heating means comprises a conduit (20, 26) passing through both said fuel tank (12) and said fuel processor (14) to conduct heated fluid through both said fuel processor and said tank, the fuel pickup tube (24) being disposed in said tank for conducting fuel within said tank from a location in close proximity with said tank conduit (26).

3. A fuel supply system for heating fuel according to claim 2, characterised in that said heated fluid is coolant from an internal combustion engine.

4. A fuel supply system for heating fuel according to claim 2 or 3, characterised in that said heated fluid first passes through said fuel processor conduit (20) and thereafter through said tank conduit (26).

5. A fuel supply system for heating fuel according to any one of claims 2 to 4, characterised in that said fuel pickup tube (24) is disposed above said tank conduit (26).

6. A fuel supply system for heating fuel according to any preceding claim, characterised in that said fuel processor (230) is physically separated from said fuel tank (212).

7. A fuel supply system for heating fuel according to any one of claims 1 to 5, characterised in that said fuel processor (14) is integral with said fuel tank (12).

8. A fuel supply system according to claim 7, characterised in that a wall (18) separates said fuel tank into a main fuel reservoir section and a fuel processor section.

9. A fuel supply system according to claim 8, characterised in that said first heating means comprises a conduit (20) for conducting a heated fluid within the interior of said fuel processor section.

10. A fuel supply system according to claim 9, characterised in that said heated fluid is coolant from an internal combustion engine.

11. A fuel supply system for heating fuel according to claim 9 or 10, characterised in that said first fuel heating means includes a heat exchanger connected to a wall separating the fuel tank (112) from the fuel processor (114), the heat exchanger conducting heat from said wall to fuel in said fuel tank.

12. A fuel supply system according to claim 11, characterised in that said heat exchanger is in the form of a metal plate.

13. A fuel supply system according to claim 11, characterised in that said heat exchanger is in the form of one or more metal rods (128).

14. A fuel supply system according to claim 11, characterised in that said heat exchanger comprises one or more heat pipes.

15. A fuel supply system according to claim 9, characterised by a second electrical heater disposed in the main fuel tank, said second electrical heater serving both to transmit heat from said fuel processor when said second electrical heater is not energized and directly to heat fuel within said main fuel tank when energized.

16. A fuel supply system for heating fuel according to any one of claims 11 to 14, characterised in that said wall (18) is substantially planar.

17. A fuel supply system according to any one of claims 11 to 14, characterised in that said wall forms an enclosed vessel (118) surrounded by fuel within said fuel supply tank (112).

## Patentansprüche

1. Kraftstoffversorgungsanlage, geeignet zum Anwärmen des Kraftstoffs, mit

einem Kraftstofftank (12),

einer Kraftstoff-Behandlungseinheit (14), die geeignet ist, ein Kraftstoffvolumen aufzunehmen, das wesentlich geringer ist als die Kraftstoff-Füllmenge des genannten Tanks,

Kraftstoff-Beheizungsmittel (20, 26) zum Beheizen des Kraftstoffs sowohl innerhalb der Kraftstoff-Behandlungseinheit (14) als auch innerhalb eines örtlich begrenzten Bereiches in dem genannten Kraftstofftank (12) und

Leitungsmittel (24, 38), um den Kraftstoff vom Kraftstofftank (12) in die Kraftstoff-Behandlungseinheit (14) hinein und aus dieser herauszuleiten, wobei die genannten Leitungsmittel (24, 38) eine Kraftstoff-Aufnahmeröhre (24) enthalten, die so in dem Kraftstofftank (12) angeordnet ist, daß sie den Kraftstoff aus der nächsten Umgebung der Kraftstoff-Beheizungsmittel (26) ableitet,

gekennzeichnet durch zweite Kraftstoff-Beheizungsmittel (22) zum Beheizen des Kraftstoffs innerhalb der Kraftstoff-Behandlungseinheit (14), die einen in der Kraftstoff-Behandlungseinheit (14) angeordneten elektrischen Heizapparat (22) enthalten.

2. Kraftstoffversorgungsanlage, geeignet zum Anwärmen des Kraftstoffs, nach Anspruch 1, dadurch gekennzeichnet, daß die ersten Kraftstoff-Beheizungsmittel (20, 26) eine Leitung (20, 26) enthalten, die sowohl durch den Kraftstofftank (12) als auch durch die Kraftstoff-Behandlungseinheit (14) verläuft, um erhitzte Flüssigkeit sowohl durch die Kraftstoff-Behandlungseinheit (14) als auch durch den Kraftstofftank (12) zu leiten, wobei die Kraftstoff-Aufnahmeröhre (24) so im Tank (12) angeordnet ist, daß sie den Kraftstoff aus der unmittelbaren Nähe der Leitung (26) ableitet.

3. Kraftstoffversorgungsanlage, geeignet zum Anwärmen des Kraftstoffs, nach Anspruch 2, dadurch gekennzeichnet, daß die genannte erhitzte Flüssigkeit die Kühlflüssigkeit einer Brennkraftmaschine ist.

4. Kraftstoffversorgungsanlage, geeignet zum Anwärmen des Kraftstoffs, nach Anspruch 2 oder 3, dadurch gekennzeichnet, daß erhitzte Flüssigkiet zuerst durch die Leitung (20) in der Kraftstoff-Behandlungseinheit (14) und danach durch die Tankleitung (26) fließt.

5. Kraftstoffversorgungsanlage, geeignet zum Anwärmen des Kraftstoffs, nach einem der Ansprüche 2 bis 4, dadurch gekennzeichnet, daß die Kraftstoff-Aufnahmeröhre (24) oberhalb der Tankleitung (26) angeordnet ist.

6. Kraftstoffversorgungsanlage nach einem der vorgenannten Ansprüche, dadurch gekennzeichnet, daß die Kraftstoff-Behandlungseinheit (230) körperlich von dem Kraftstofftank (212) getrennt ist.

7. Kraftstoffversorgungsanlage, geeignet zum Anwärmen des Kraftstoffs, nach einem der vorgenannten Ansprüche 1 bis 5, dadurch gekennzeichnet, daß die Kraftstoff-Behandlungseinheit (14) mit dem Tank (12) eine Einheit bildet.

8. Kraftstoffversorgungsanlage, geeignet zum Anwärmen des Kraftstoffs, nach Anspruch 7, dadurch gekennzeichnet, daß eine Wand (18) den Kraftstofftank (12) in einen großen Kraftstoff-Vorratsabschnitt (16) und einen Kraftstoff-Behandlungsabschnitt (14) teilt.

9. Kraftstoffversorgungsanlage, geeignet zum Anwärmen des Kraftstoffs nach Anspruch 8, dadurch gekennzeichnet, daß die ersten Beheizungsmittel eine Leitung (20) enthalten, um eine erhitzte Flüssigkeit durch das Innere des Kraftstoff-Behandlungsabschnitts (14) zu leiten.

10. Kraftstoffversorgungsanlage, geeignet zum Anwärmen des Kraftstoffs, nach Anspruch 9, dadurch gekennzeichnet, daß die erhitzte Flüssigkeit die Kühlflüssigkiet einer Brennkraftmaschine ist.

11. Kraftstoffversorgungsanlage, geeignet zum Anwärmen des Kraftstoffs, nach Anspruch 9 oder 10, dadurch gekennzeichnet, daß die ersten Kraftstoff-Beheizungsmittel einen Wärmetauscher enthalten, der mit einer Wand (118) verbunden ist, die den Kraftstofftank (112) von der Kraftstoff-Behandlungseinheit (114) abtrennt, wobei der Wärmetauscher Wärme über die genannte Wand (118) an den Kraftstoff im Kraftstofftank (112) abgibt.

12. Kraftstoffversorgungsanlage, geeignet zum Anwärmen des Kraftstoffs, nach Anspruch 11, dadurch gekennzeichnet, daß der genannte Wärmetauscher in Form einer Metallplatte gestaltet ist.

13. Kraftstoffversorgungsanlage, geeignet zum Beheizen des Kraftstoffs, nach Anspruch 11, dadurch gekennzeichnet, daß der genannte Wärmetauscher in Form einer oder mehrerer Metallstangen (128) gestaltet ist.

14. Kraftstoffversorgungsanlage, geeignet zum Beheizen des Kraftstoffs, nach Anspruch 11, dadurch gekennzeichnet, daß der genannte Wärmetauscher ein oder mehrere Wärmeübertragungsrohre enthält.

15. Kraftstoffversorgungsanlage, geeignet zum Beheizen des Kraftstoffs, nach Anspruch 9, gekennzeichnet durch einen zweiten im Hauptbrennstofftank (312) angeordneten elektrischen Heizapparat (338), der sowohl dazu dient in ausgeschaltetem Zustand Wärme von der Kraftstoff-Behandlungseinheit (314) zu übertragen als auch im eingeschalteten Zustand den Kraftstoff im Hauptkraftstofftank (312) direkt zu erhitzen.

16. Kraftstoffversorgungsanlage, geeignet zum Beheizen des Kraftstoffs, nach einem der Ansprüche 11 bis 14, dadurch gekennzeichnet, daß die Wand (118) im wesentlichen planar ist.

17. Kraftstoffversorgungsanlage, geeignet zum Beheizen des Kraftstoffs, nach einem der Ansprüche 11 bis 14, dadurch gekennzeichnet, daß die Wand (118) einen geschlossenen Kessel formt, der im Kraftstoffvorratstank (112) von Kraftstoff umgeben ist.

**Revendications**

1. Système d'alimentation en carburant pour réchauffer du carburant, comportant: un réservoir de carburant (12), une unité de traitement de carburant (14) adaptée pour contenir un volume de carburant notablement inférieur à la capacité volumétrique du réservoir de carburant, des moyens de chauffage du carburant (20, 26) pour réchauffer le carburant à la fois à l'intérieur de l'unité de traitement et à l'intérieur d'une zone localisée du réservoir, et des moyens de conduits (24, 38) pour transférer le carburant du réservoir de carburant à l'unité de traitement et pour transférer le carburant hors de cette unité de traitement, ces moyens de conduits comportant un tube de transfert de carburant (24) disposé dans le réservoir de carburant pour conduire le carburant de ce réservoir à un emplacement au voisinage immédiat des moyens de chauffage (26), caractérisé en ce qu'il est prévu des seconds moyens de chauffage de carburant (22) pour chauffer le carburant à l'intérieur de l'unité de traitement (14), ces seconds moyens de chauf-

fage de carburant comportant un élément chauffant électrique (22) disposé dans l'unité de traitement (14).

2. Système d'alimentation en carburant selon la revendication 1, caractérisé en ce que les premiers moyens de chauffage de carburant comportent un conduit (20, 26) traversant à la fois le réservoir de carburant (12) et l'unité de traitement de carburant (14) pour conduire un fluide chauffé à la fois à travers l'unité de traitement et le réservoir, le tube de transfert de carburant (24) étant disposé dans le réservoir pour conduire le carburant à l'intérieur de ce réservoir depuis un emplacement au voisinage immédiat du conduit (26) dans le réservoir.

3. Système d'alimentation en carburant pour chauffer le carburant selon la revendication 2, caractérisé en ce que le fluide chauffé est un fluide de refroidissement d'un moteur à combustion interne.

4. Système d'alimentation en carburant pour chauffer du carburant selon la revendication 2 ou 3, caractérisé en ce que le fluide chauffé passe d'abord à travers le conduit (20) de l'unité de traitement et ensuite à travers le conduit (26) du réservoir.

5. Système d'alimentation en carburant pour chauffer du carburant selon l'une quelconque des revendications 2 à 4, caractérisé en ce que le tube de transfert de carburant (24) est disposé au-dessus du conduit (26) du réservoir.

6. Système d'alimentation en carburant pour chauffer du carburant selon l'une quelconque des revendications précédentes, caractérisé en ce que l'unité de traitement de carburant (230) est physiquement séparée du réservoir de carburant (212).

7. Système d'alimentation en carburant pour chauffer du carburant selon l'une quelconque des revendications 1 à 5, caractérisé en ce que l'unité de traitement de carburant (14) est d'un seul tenant avec le réservoir de carburant (12).

8. Système d'alimentation en carburant selon la revendication 7, caractérisé en ce qu'une cloison (18) divise le réservoir de carburant en une section de réservoir de carburant proprement dit et une section de traitement du carburant.

9. Système d'alimentation en carburant selon la revendication 8, caractérisé en ce que les premiers moyens de chauffage comportent un conduit (20) pour conduire un fluide chauffé à l'intérieur de la section de traitement du carburant.

10. Système d'alimentation en carburant selon la revendication 9, caractérisé en ce que le fluide chauffé est un fluide de refroidissement en provenance d'un moteur à combustion interne.

11. Système d'alimentation en carburant pour chauffer du carburant selon la revendication 9 ou 10, caractérisé en ce que les premiers moyens de chauffage du carburant comportent un échangeur thermique raccordé à une cloison séparant le réservoir de carburant (112) de l'unité de traitement de carburant (114), l'échangeur thermique conduisant la chaleur depuis cette cloison jusqu'au carburant dans le réservoir de carburant.

12. Système d'alimentation en carburant selon la revendication 11, caractérisé en ce que l'échangeur thermique se présente sous la forme d'une plaque métallique.

13. Système d'alimentation en carburant selon la revendication 11, caractérisé en ce que l'échangeur thermique se présente sous la forme d'une ou de pusieurs tiges métalliques (128).

14. Système d'alimentation en carburant selon la revendication 11, caractérisé en ce que cet échangeur thermique comporte un ou plusieurs tubes thermiques.

15. Système d'alimentation en carburant selon la revendication 9, caractérisé en ce qu'un deuxième élément chauffant électrique est disposé dans le réservoir de carburant proprement dit, ce deuxième élément chauffant électrique servant à la fois à transmettre de la chaleur depuis l'unité de traitement du carburant lorsque le deuxième élément chauffant électrique n'est pas alimenté et directement pour chauffer le carburant à l'intérieur du réservoir de carburant proprement dit lorsqu'il est alimenté en courant.

16. Système d'alimentation en carburant pour chauffer du carburant selon l'une quelconque des revendications 11 à 14, caractérisé en ce que la cloison (18) est pratiquement plane.

17. Système d'alimentation en carburant selon l'une quelconque des revendications 11 à 14, caractérisé en ce que cette cloison forme un récipient clos (118) entouré par le carburant à l'intérieur du réservoir d'alimentation en carburant (112).

FIG.3.

FIG.4.

FIG. 1.

FIG. 2.